# EUROPEAN PATENT APPLICATION

(11) **EP 4 443 030 A1**
(43) Date of publication of application: **09.10.2024**
(21) Application number: 22900570.7
(22) Date of filing: 30.11.2022
(51) Int. Cl.: F16K 1/02, F16K 1/32, F16K 1/38, F16K 1/42

(54) **ELECTRONIC EXPANSION VALVE**

(30) Priority: 30.11.2021 CN 202123020130 U; 30.11.2021 CN 202123000420 U
(71) Applicant: Zhejiang Dunan Artificial Environment Co., Ltd., Shaoxing Zhejiang 311835 (CN)
(72) Inventor: JIN, Ju, Shaoxing, Zhejiang 311835 (CN); SHA, Haijian, Shaoxing, Zhejiang 311835 (CN); WANG, Fugang, Shaoxing, Zhejiang 311835 (CN)
(74) Representative: Berggren Oy
(86) International application number: PCT/CN2022/135693
(87) International publication number: WO 2023/098766

(57) **Abstract**

An electronic expansion valve, including: a valve seat (10) and a valve needle (20), the valve needle being mounted in the valve seat; a valve core (30) provided at one end of the valve seat, the valve core (30) being provided with a valve port; a drive assembly, which drives the valve needle to move axially to open or close the valve port; and a spring sleeve (50), a spring (60), and a screw (70), the spring being mounted in the spring sleeve, the screw being movably mounted at one end of the spring sleeve, the valve needle being provided with a positioning step, and the other end of the spring sleeve being sleeved at the positioning step to position the other end of the spring sleeve by means of the positioning step. The electronic expansion valve can solve the technical problem in the related art of the spring sleeve being prone to inclination during mounting.

## Description

### Cross-Reference to Related Application

The disclosure claims priority to Chinese Patent Application No. 202123020130.6, filed to the Chinese Patent Office on November, 30, 2021 and entitled "Electronic Expansion Valve", and Chinese Patent Application No. 202123000420.4, filed to the Chinese Patent Office on November, 30, 2021 and entitled "Electronic Expansion Valve".

### Technical Field

The present disclosure relates to the technical field of electronic expansion valves, and in particular to an electronic expansion valve.

### Background

At present, an electronic expansion valve in the art known to inventors includes a valve seat, a valve needle, a pressing sleeve, a screw, a spring, and a spring sleeve. The valve needle is movably disposed in the valve seat, the spring is disposed in the spring sleeve, the valve needle is connected with one end of the spring sleeve, and the screw is movably disposed at the other end of the spring sleeve. The pressing sleeve is disposed at the side of the screw to press the spring sleeve to the end of the valve needle, so as to improve the connection reliability of the spring sleeve and the valve needle.

However, in the above structure, a radial step connecting the pressing sleeve and the screw is small, which is prone to inclination of the spring sleeve and the pressing sleeve after pressing, resulting in the problem of poor concentricity or coaxiality between the screw and the valve needle. Due to poor concentricity, the situation that the screw is stuck during rotation is caused, which is not conductive to the normal operation of the electronic expansion valve.

### Summary

The main purpose of the present disclosure is to provide an electronic expansion valve to solve the technical problem in the art known to inventors of the spring sleeve being prone to inclination during mounting.

In order to the above purpose, the present disclosure provides an electronic expansion valve, including: a valve needle; and a spring sleeve, a spring, and a screw, the spring being mounted in the spring sleeve, the screw being movably mounted at one end of the spring sleeve, the valve needle being provided with a positioning step, and an other end of the spring sleeve being sleeved at the positioning step to position the other end of the spring sleeve by means of the positioning step.

In some embodiments , the other end of the spring sleeve is fixedly welded to the positioning step. A balance hole is provided in a side wall of the spring sleeve.

In some embodiments, the electronic expansion valve further includes: a valve seat, the valve needle being mounted in the valve seat; a valve core provided at one end of the valve seat, the valve core being provided with a valve port; and a drive assembly, which drives the valve needle to move axially to adjust an opening degree of the valve port.

In some embodiments, a balance channel extending in an axial direction is provided in the valve needle to balance the pressure at both ends of the valve needle, and a first sealing piece is provided between the valve needle and the valve seat.

In some embodiments, the first sealing piece is of a sealing ring structure, and the first sealing piece is sleeved on the valve needle.

In some embodiments, the electronic expansion valve further includes a bearing sleeved on the screw, the bearing being located between the screw and the spring sleeve.

In some embodiments, one end, away from the valve needle, of the spring sleeve extends in a direction of the screw to form a limiting table, and the limiting table is configured to limit the bearing.

In some embodiments, a limiting protrusion is provided on an outer peripheral wall of the screw, a limiting piece is provided at one end, close to the valve needle, of the screw, the limiting piece and the limiting protrusion are provided at an interval to form a limiting space, the screw is provided in the bearing in a penetrating manner, and the bearing is located in the limiting space.

In some embodiments, the valve core is made of a material with a hardness smaller than that of the valve needle, an inner wall of the valve core or an end surface of the valve core forms a sealing surface, and the sealing surface and an outer wall surface of the valve needle form a soft sealing structure.

In some embodiments, the sealing surface is a tapered surface, the valve core is provided with a first end and a second end which are disposed oppositely, the first end is located above the second end, and a circulation area of the sealing surface is gradually reduced in an extending direction from the first end to the second end.

In some embodiments, the valve seat is provided with a first mounting channel, the first mounting channel is provided with a first mounting port and a second mounting port which are disposed oppositely, the first mounting port is located above the second mounting port, the first mounting port is located at one side, close to the screw, of the second mounting port, a cross-sectional area of the second mounting port is greater than that of the first mounting port, and a shape of the second mounting port matches a shape of the valve core, so that the valve core is mounted at the second mounting port.

In some embodiments, the first mounting channel extends in a radial direction, and the valve needle is movably provided in the first mounting channel. A cross-sectional area of the valve needle is greater than that of the first mounting port, and the cross-sectional area of the valve needle is smaller than that of the second mounting port, so that the valve needle is mounted in the first mounting channel through the second mounting port.

In some embodiments, the electronic expansion valve further includes a valve core sleeve, at least part of the valve core sleeve being mounted in the second mounting channel, and the valve core sleeve being located at one end, away from the valve needle, of the valve core.

In some embodiments, an end of the valve core sleeve abuts against an end of the valve core.

In some embodiments, the electronic expansion valve further includes a mounting base body. The mounting base body is provided with a second mounting channel, and the valve seat, the valve core, and the valve core sleeve are all mounted in the second mounting channel. A second sealing piece is provided between the mounting base body and the valve seat. And/or, a third sealing piece is provided between the mounting base body and the valve core sleeve.

In some embodiments, the second sealing piece is of a sealing ring structure, a first mounting groove is provided in an outer wall of the valve seat, and the second sealing piece is mounted in the first mounting groove. And/or, the third sealing piece is of a sealing ring structure, a second mounting groove is provided in an outer wall of the valve core sleeve, and the third sealing piece is mounted in the second mounting groove.

In some embodiments, the valve core is made of a non-metal material, and the inner wall of the valve core or the end surface of the valve core forms a soft sealing surface.

In some embodiments, the valve core is made of a polytetrafluoroethylene material.

By applying the technical solution of the present disclosure, the valve needle is provided with the positioning step, and the other end of the spring sleeve is sleeved at the positioning step, so that the other end of the spring sleeve can be conveniently and stably positioned, the inclination of the spring sleeve on the valve needle is avoided, the concentricity or coaxiality of the screw and the valve needle is ensured, and the situation that the screw is stuck during rotation is avoided. Therefore, by means of the technical solution of the present disclosure, the technical problem in the related art of the spring sleeve being prone to inclination during mounting can be solved.

### Brief Description of the Drawings

The drawings of the specification, which constitute a part of the present disclosure, are intended to provide a further understanding of the present disclosure, and the exemplary embodiments of the present disclosure and the description thereof are intended to explain the present disclosure and do not constitute an undue limitation on the present disclosure. In the drawings:
Fig. 1 illustrates a schematic structural diagram of a local structure of an electric valve according to an embodiment of the present disclosure.
Fig. 2 illustrates an exploded view of a local structure in Fig. 1.
Fig. 3 illustrates a schematic diagram of a mounting structure of a screw, a bearing, and a spring sleeve according to an embodiment of the present disclosure.
Fig. 4 illustrates a schematic structural diagram of a bearing sleeved on a screw according to an embodiment of the present disclosure.
Fig. 5 illustrates a schematic structural diagram of a structure in Fig. 1 mounted on a mounting base body.

Herein, the above drawings include the following reference signs.

10. Valve seat; 20. Valve needle; 30. Valve core; 31. Sealing surface; 41. First sealing piece; 42. Second sealing piece; 43. Third sealing piece; 50. Spring sleeve; 51. Balance hole; 60. Spring; 70. Screw; 80. Bearing; 90. Valve core sleeve; 91. Main body part; 92. Positioning part; 100. Mounting base body.

### Detailed Description of the Embodiments

It is to be noted that the embodiments in the present disclosure and features in the embodiments may be combined with each other without conflict. The present disclosure is described in detail below with reference to the drawings and in conjunction with the embodiments.

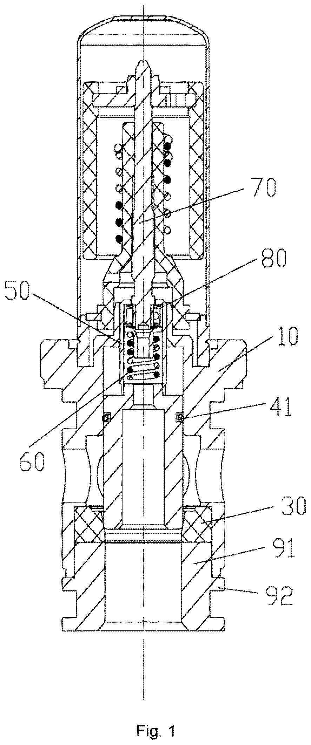

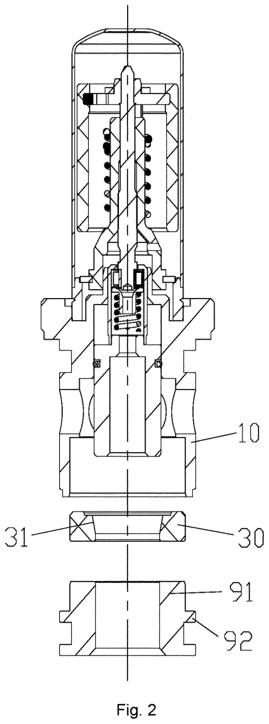

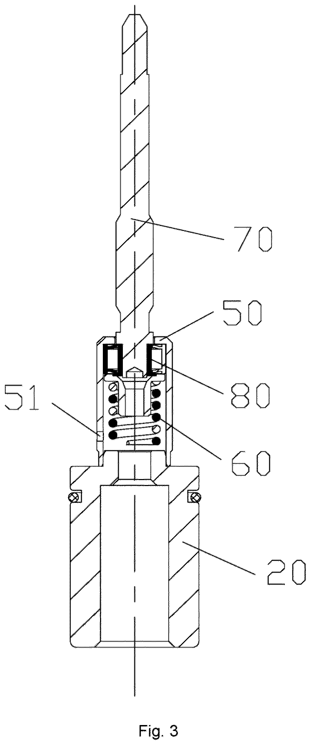

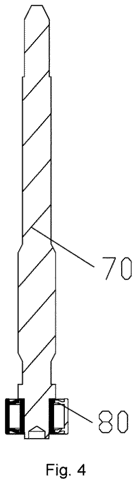

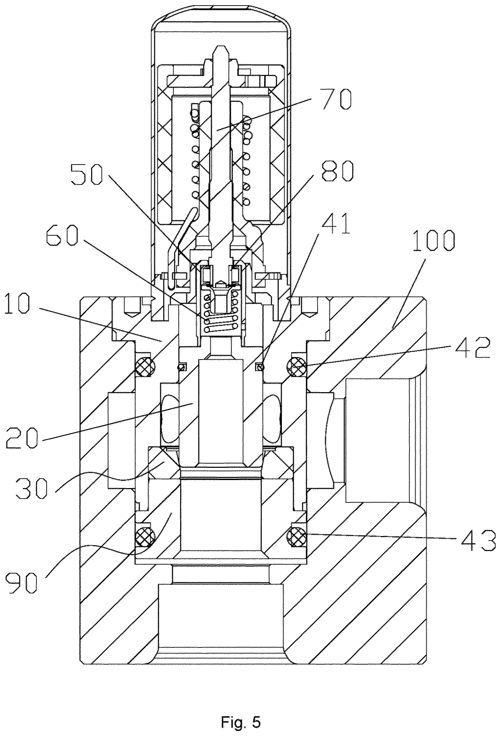

As shown in Fig. 1 to Fig. 5, some embodiments of the present disclosure provides an electronic expansion valve, including a valve seat 10, a valve needle 20, a valve core 30, a drive assembly, a spring sleeve 50, a spring 60, and a screw 70. The valve needle 20 is mounted in the valve seat 10, the valve core 30 is disposed at one end of the valve seat 10, and the valve core 30 is provided with a valve port. The drive assembly drives the valve needle 20 to move axially to open or close the valve port and adjust an opening degree of the valve port, the spring 60 is disposed in the spring sleeve 50, the screw 70 is movably disposed at one end of the spring sleeve 50, the valve needle 20 is provided with a positioning step, and an other end of the spring sleeve 50 is sleeved at the positioning step to position the other end of the spring sleeve 50 by means of the positioning step.

By using the electronic expansion valve provided in the embodiments, the valve needle 20 is provided with the positioning step, and the other end of the spring sleeve 50 is sleeved at the positioning step, so that the other end of the spring sleeve 50 can be conveniently and stably positioned due to large area of the step formed in a radial direction of the valve needle 20, the inclination of the spring sleeve 50 on the valve seat 10 is avoided, the concentricity or coaxiality of the screw 70 and the valve needle 20 is ensured, and the situation that the screw 70 is stuck during rotation is avoided.

In some embodiments, the valve needle 20 is of an axial symmetry structure, and the spring sleeve 50 is sleeved at the positioning step to ensure the coaxiality of the spring sleeve 50 and the valve needle 20. The screw 70 is provided at one end of the spring sleeve 50, so that the coaxiality of the screw 70 and the valve needle 20 is conveniently ensured, and then smooth rotation of the screw 70 is ensured.

In order to improve the mounting stability of the spring sleeve 50, the other end of the spring sleeve 50 in the embodiment is fixedly welded to the positioning step. Witch such a structural arrangement, the coaxiality of the screw 70 and the valve needle 20 can be further ensured. A balance hole 51 is provided in a side wall of the spring sleeve 50 to balance the internal pressure of the spring sleeve 50.

In some embodiments, a balance channel extending in an axial direction is disposed in the valve needle 20 to balance the pressure at both ends of the valve needle 20, and a first sealing piece 41 is disposed between the valve needle 20 and the valve seat 10. With such a structural arrangement, the first sealing piece 41 can effectively seal a gap between the valve needle 20 and the valve seat 10, and the balance channel can facilitate the balance of the pressure at upper and lower ends of the valve needle 20 in a valve closing state.

In some embodiments, the first sealing piece 41 is of a sealing ring structure, and the first sealing piece 41 is sleeved on the valve needle 20. With such a structural arrangement, the gap between the valve needle 20 and the valve seat 10 can be conveniently and effectively sealed to further improve the sealing performance.

In some embodiments, the electronic expansion valve further includes a bearing 80. The bearing 80 is sleeved on the screw 70, and the bearing 80 is disposed between the screw 70 and the spring sleeve 50. With such a structural arrangement, the friction between the valve needle 20 and the valve core 30 can be conveniently reduced, and the abrasion of the valve core 30 can be reduced.

In some embodiments, the valve core 30 is made of a material with a hardness smaller than that of the valve needle 20, an inner wall of the valve core 30 or an end surface of the valve core 30 forms a sealing surface 31, and the sealing surface 31 and an outer wall surface of the valve needle 20 form a soft sealing structure. With such a structural arrangement, due to the fact that the valve needle 20 is made of a metal material, and the valve core 30 is made of a material with a hardness smaller than that of the valve needle 20, the soft sealing structure formed by the sealing surface 31 and the outer wall surface of the valve needle 20 can effectively seal the gap between the valve needle 20 and the valve core 30 to prevent liquid from flowing out from the gap between the valve needle 20 and the valve core 30, thereby improving the overall sealing performance of the structure. In some embodiments, the valve core 30 can be made of a soft metal material or a non-metal material.

In some embodiments, the sealing surface 31 is a tapered surface, the valve core 30 is provided with a first end and a second end which are disposed oppositely, the first end is disposed above the second end, and a circulation area of the sealing surface 31 is gradually reduced in an extending direction from the first end to the second end. With such a structural arrangement, the sealing performance between the valve core 30 and the valve core 20 can be better improved, and the leakage condition between the valve core 30 and the valve needle 20 can be reduced.

In some embodiments, the valve seat 10 is provided with a first mounting channel, the first mounting channel is provided with a first mounting port and a second mounting port which are disposed oppositely, the first mounting port is disposed above the second mounting port, the first mounting port is disposed at one side, close to the screw 70, of the second mounting port, a cross-sectional area of the second mounting port is greater than that of the first mounting port, and a shape of the second mounting port matches a shape of the valve core 30, so that the valve core 30 is mounted at the second mounting port, and the valve core 30 is mounted in the first mounting channel. With such a structural arrangement, during mounting, the valve core 30 is mounted from the second mounting port, which facilitates mounting and operation. Due to the fact that the valve core 30 can be mounted from the second mounting port, the valve core 30 can be of a large caliber, thereby achieving large-flow communication.

In some embodiments, the valve core 30 is of a tubular structure.

In some embodiments, the first mounting channel extends in the radial direction, and the valve needle 20 is movably disposed in the first mounting channel. A cross-sectional area of the valve needle 20 is greater than that of the first mounting port, and the cross-sectional area of the valve needle 20 is smaller than that of the second mounting port, so that the valve needle 20 is mounted in the first mounting channel through the second mounting port. With such a structural arrangement, an inverted structure can be conveniently formed, thereby facilitating the assembly of the valve needle 20.

In some embodiments, the electronic expansion valve further includes a valve core sleeve 90, at least part of the valve core sleeve 90 being mounted in the second mounting channel, and the valve core sleeve 90 being disposed at one end, away from the valve needle 20, of the valve core 30. With such a structural arrangement, the structure of the existing integrated valve seat 10 is changed into a split structure, so as to facilitate the mounting and operation. Meanwhile, the valve core 30 can be effectively positioned by means of the valve core sleeve 90, so as to improve the arrangement stability of the valve core 30, thereby improving the overall performance of the structure. The valve core sleeve 90 can also be sleeved outside the second mounting port, as long as the valve core sleeve 90 can position the valve core 30.

In some embodiments, the valve core sleeve 90 includes a main body part 91 and a positioning part 92, at least part of the main body part 91 being inserted into the second mounting port, and an end of the main body part 91 abutting against an end of the valve core 30. The positioning part 92 protrudes from an outer wall of the main body part 91, and the positioning part 92 is configured for abutting and positioning with an end of the valve seat 10, so as to better position the valve core 30 and improve the mounting stability of the valve core 30. In some embodiments, the main body part 91 and the positioning part 92 are integrally formed to facilitate production and manufacturing. The positioning part 92 is configured for welding with the valve seat 10.

In some embodiments, the electronic expansion valve further includes a mounting base body 100. The mounting base body 100 is provided with a second mounting channel, and the valve seat 10, the valve core 30, and the valve core sleeve 90 are all mounted in the second mounting channel. A second sealing piece 42 is disposed between the mounting base body 100 and the valve seat 10. Or, a third sealing piece 43 is disposed between the mounting base body 100 and the valve core sleeve 90. Or, a second sealing piece 42 is disposed between the mounting base body 100 and the valve seat 10, and a third sealing piece 43 is disposed between the mounting base body 100 and the valve core sleeve 90.

In some embodiments, the second sealing piece 42 is disposed between the mounting base body 100 and the valve seat 10, the second sealing piece 42 is sleeved on the valve seat 10, and the second sealing piece 42 is disposed between the outer wall of the valve seat 10 and the inner wall of the second mounting channel. With such a structural arrangement, the gap between the outer wall of the valve seat 10 and the inner wall of the second mounting channel can be conveniently and effectively sealed to improve the sealing performance of the electronic expansion valve.

The third sealing piece 43 is disposed between the mounting base body 100 and the valve core sleeve 90 to better improve the sealing performance of the electronic expansion valve. In some embodiments, the mounting base body 100 in the embodiment may be a valve body or a mounting table.

In some embodiments, a part of the valve core sleeve 90 is mounted in the first mounting channel, and the other part of the valve core sleeve 90 is mounted in the second mounting channel. The third sealing piece 43 is sleeved on the valve core sleeve 90, and the third sealing piece 43 is disposed between the outer wall of the valve core sleeve 90 and the inner wall of the second mounting channel. With such a structural arrangement, the gap between the valve core sleeve 90 and the second mounting channel can be conveniently and effectively sealed to improve the sealing performance of the electronic expansion valve.

In some embodiments, the second sealing piece 42 is of a sealing ring structure, a first mounting groove is provided in the outer wall of the valve seat 10, and the second sealing piece 42 is mounted in the first mounting groove. The third sealing piece 43 is of a sealing ring structure, a second mounting groove is provided in an outer wall of the valve core sleeve 90, and the third sealing piece 43 is mounted in the second mounting groove. With such a structural arrangement, the positioning stability of the second sealing piece 42 and the third sealing piece 43 can be conveniently improved, so as to prevent the second sealing piece 42 and the third sealing piece 43 from moving during operation.

In some embodiments, the first sealing piece 41 is sleeved on the valve needle 20, and the first sealing piece 41 is disposed between the valve needle 20 and the valve seat 10 to better improve the sealing performance. In addition, a balance channel is provided in the valve needle 20 to balance the pressure at both ends of the valve needle 20, thereby ensuring the balance of pressure at the upper and lower ends of the valve needle 20 while achieving sealing.

In some embodiments, the valve core 30 is disposed in the valve seat 10, and the valve core 30 is provided with a valve port. The drive assembly drives the valve needle 20 to move axially to open and close the valve port, an inner wall of the valve core 30 or an end surface of the valve core 30 forms a sealing surface 31, and the sealing surface 31 and the outer wall surface of the valve needle 20 form a soft sealing structure. One end of the spring sleeve 50 is sleeved on the end of the valve needle 20, and the screw 70 is mounted on the other end of the spring sleeve 50. Due to the fact that the bearing 80 is disposed between the screw 70 and the spring sleeve 50, a sealing structure is formed between the valve core 30 and the valve needle 20, so that the friction between the valve core 30 and the valve needle 20 is smaller than the friction between the valve core 30 and the valve seat 10, which avoids the problem of abrasion at the valve port, thereby effectively improving the sealing performance of the structure.

In some embodiments, the valve core 30 is made of a non-metal material, so that the sealing structure is a soft sealing structure. With such a structural arrangement, the soft sealing structure can effectively prevent leakage between the valve core 30 and the valve seat 10. Due to the fact that the valve needle 20 is made of a metal material, and the valve core 30 is made of a non-metal material, the hard metal material and the soft non-metal material can conveniently improve the sealing performance when mounted together. In some embodiments, the valve core 30 is mainly made of a plastic material.

In some embodiments, the valve core 30 is made of a polytetrafluoroethylene material to better improve the sealing performance of the electronic expansion valve.

In some embodiments, one end, away from the valve needle 20, of the spring sleeve 50 extends in a direction of the screw 70 to form a limiting table, and the limiting table is configured to limit the bearing 80. With such a structural arrangement, the bearing 80 can be conveniently and stably limited, and the arrangement stability of the bearing 80 is improved.

In some embodiments, a limiting protrusion is provided on an outer peripheral wall of the screw 70, a limiting piece is provided at one end, close to the valve needle 20, of the screw 70, and the limiting piece and the limiting protrusion are disposed at an interval to form a limiting space. The screw 70 is disposed in the bearing 80 in a penetrating manner, and the bearing 80 is disposed in the limiting space, so that the screw 70 and the bearing 80 are reliably connected, thereby improving the mounting stability of the structure. In some embodiments, the bearing 80 includes an outer ring, a ball, and an inner ring. The inner ring is fixedly connected with the screw 70, and the outer ring is in sliding fit with the spring sleeve 50.

In some embodiments, the inner wall of the valve core 30 forms a sealing surface 31, the valve core 30 is provided with a first end and a second end which are disposed oppositely, the first end is provided on a side, close to the valve needle 20, of the second end, and a circulation area of the sealing surface 31 is gradually reduced in an extending direction from the first end to the second end. With such a structural arrangement, the sealing performance between the valve core 30 and the valve core 20 can be conveniently improved, and the leakage condition between the valve core 30 and the valve needle 20 can be reduced.

From the above description, it can be seen that the above embodiments of the present disclosure achieve the following technical effects: the coaxiality of the screw 70 and the valve needle 20 is ensured to avoid the screw 70 being stuck during rotation; and the abrasion of the valve port is reduced to ensure the sealing performance of the electronic expansion valve.

It is to be noted that terms used herein are only for the purpose of describing the specific implementations and not intended to limit exemplary implementations of the present disclosure. For example, singular forms, used herein, are also intended to include plural forms, unless otherwise clearly pointed out. In addition, it is also to be understood that terms "contain" and/or "include" used in the specification refer/refers to existence of features, steps, operations, apparatuses, components and/or combinations thereof.

Unless otherwise specified, relative arrangements of components and steps elaborated in these embodiments, numeric expressions and numeric values do not limit the scope of the present disclosure. Furthermore, it is to be understood that for ease of descriptions, the size of each part shown in the drawings is not drawn in accordance with an actual proportional relation. Technologies, methods and devices known by those of ordinary skill in the art may not be discussed in detail. However, where appropriate, the technologies, the methods and the devices shall be regarded as part of the authorized description. In all examples shown and discussed herein, any specific value should be interpreted as only exemplar values instead of limited values. As a result, other examples of the exemplary embodiments may have different values. It is to be noted that similar marks and letters represent similar items in the following drawings. As a result, once a certain item is defined in one drawing, it is unnecessary to further discus the certain item in the subsequent drawings.

In the description of the present disclosure, it is to be understood that the orientations or positional relationships indicated by the orientation words "front, rear, upper, down, left and right" "transverse, longitudinal, vertical and horizontal", "top and bottom", etc. are based on the orientations or positional relationships shown in the drawings, and are only for the convenience of describing the present disclosure and simplifying the description. Unless stated to the contrary, these orientation words do not indicate or imply that the apparatus or element referred to must have a specific orientation, be constructed and operated in a specific orientation, and therefore cannot be construed as limiting the scope of protection of the present disclosure. The orientation words "inside and outside" refer to inside and outside relative to the outline of each part itself.

For ease of description, spatially relative terms such as "over", "above", "on an upper surface" and "upper" may be used herein for describing a spatial position relation between a device or feature and other devices or features shown in the drawings. It should be understood that the spatially relative terms are intended to contain different orientations of the device in usage or operation besides the orientations of the devices described in the drawings. For example, if the devices in the drawings are inverted, those described as "above other devices or structures" or "over other devices or structures" will then be positioned as "below other devices or structures" or "under other devices or structures". Thus, the exemplary term "above" may include both "above" and "below" orientations. The device may also be positioned in various other ways (rotated 90 degrees or at other orientations) and the spatially relative descriptions used herein are interpreted accordingly.

Furthermore, it is to be noted that the use of the words "first", "second" and the like to define parts is only for the convenience of distinguishing the corresponding parts, unless otherwise stated, the words have no special meaning, and therefore cannot be construed as limiting the scope of protection of the present disclosure.

The above are only the preferred embodiments of the present disclosure, and are not intended to limit the present disclosure, and for those of ordinary skill in the art, various modifications and changes can be made to the present disclosure. Any modifications, equivalent substitutions, improvements, etc. within the spirit and scope of the present disclosure shall be included in the scope of protection of the present disclosure.

## Claims

1. An electronic expansion valve, comprising:
a valve needle (20); and
a spring sleeve (50), a spring (60), and a screw (70), the spring (60) being mounted in the spring sleeve (50), the screw (70) being movably disposed at one end of the spring sleeve (50), the valve needle (20) being provided with a positioning step, and an other end of the spring sleeve (50) being sleeved at the positioning step to position the other end of the spring sleeve (50) by means of the positioning step.

2. The electronic expansion valve as claimed in claim 1, wherein the other end of the spring sleeve (50) is fixedly welded to the positioning step; and a balance hole (51) is provided in a side wall of the spring sleeve (50).

3. The electronic expansion valve as claimed in claim 1, further comprising:
a valve seat (10), the valve needle (20) being mounted in the valve seat (10);
a valve core (30), the valve core (30) being provided at one end of the valve seat (10), and the valve core (30) being provided with a valve port; and
a drive assembly, which drives the valve needle (20) to move axially to adjust an opening degree of the valve port.

4. The electronic expansion valve as claimed in claim 3, wherein a balance channel extending in an axial direction is provided in the valve needle (20) to balance the pressure at both ends of the valve needle (20), and a first sealing piece (41) is disposed between the valve needle (20) and the valve seat (10).

5. The electronic expansion valve as claimed in claim 4, wherein the first sealing piece (41) is of a sealing ring structure, and the first sealing piece (41) is sleeved on the valve needle (20).

6. The electronic expansion valve as claimed in claim 3, further comprising:
a bearing (80) sleeved on the screw (70), the bearing (80) being disposed between the screw (70) and the spring sleeve (50).

7. The electronic expansion valve as claimed in claim 6, wherein one end, away from the valve needle (20), of the spring sleeve (50) extends in a direction of the screw (70) to form a limiting table, and the limiting table is configured to limit the bearing (80).

8. The electronic expansion valve as claimed in claim 6, wherein a limiting protrusion is provided on an outer peripheral wall of the screw (70), a limiting piece is provided at one end, close to the valve needle (20), of the screw (70), the limiting piece and the limiting protrusion are provided at an interval to form a limiting space, the screw (70) is disposed in the bearing (80) in a penetrating manner, and the bearing (80) is disposed in the limiting space.

9. The electronic expansion valve as claimed in claim 3, wherein the valve core (30) is made of a material with a hardness smaller than that of the valve needle (20), an inner wall of the valve core (30) or an end surface of the valve core (30) forms a sealing surface (31), and the sealing surface (31) and an outer wall surface of the valve needle (20) form a soft sealing structure.

10. The electronic expansion valve as claimed in claim 9, wherein the sealing surface (31) is a tapered surface, the valve core (30) is provided with a first end and a second end which are disposed oppositely, the first end is disposed above the second end, and a circulation area of the sealing surface (31) is gradually reduced in an extending direction from the first end to the second end.

11. The electronic expansion valve as claimed in claim 3, wherein the valve seat (10) is provided with a first mounting channel, the first mounting channel is provided with a first mounting port and a second mounting port which are disposed oppositely, the first mounting port is disposed above the second mounting port, the first mounting port is disposed at one side, close to the screw (70), of the second mounting port, a cross-sectional area of the second mounting port is greater than that of the first mounting port, and a shape of the second mounting port matches a shape of the valve core (30), so that the valve core (30) is mounted at the second mounting port.

12. The electronic expansion valve as claimed in claim 11, wherein the first mounting channel extends in a radial direction, and the valve needle (20) is movably disposed in the first mounting channel; and a cross-sectional area of the valve needle (20) is greater than that of the first mounting port, and the cross-sectional area of the valve needle (20) is smaller than that of the second mounting port, so that the valve needle (20) is mounted in the first mounting channel through the second mounting port.

13. The electronic expansion valve as claimed in claim 11, further comprising:
a valve core sleeve (90), at least part of the valve core sleeve (90) being mounted in the second mounting port, and the valve core sleeve (90) being disposed at one end, away from the valve needle (20), of the valve core (30).

14. The electronic expansion valve as claimed in claim 13, wherein an end of the valve core sleeve (90) abuts against an end of the valve core (30).

15. The electronic expansion valve as claimed in claim 13, further comprising a mounting base body (100), the mounting base body (100) being provided with a second mounting channel, and the valve seat (10), the valve core (30), and the valve core sleeve (90) being all mounted in the second mounting channel; wherein,
a second sealing piece (42) is disposed between the mounting base body (100) and the valve seat (10); and/or,
a third sealing piece (43) is disposed between the mounting base body (100) and the valve core sleeve (90).

16. The electronic expansion valve as claimed in claim 15, wherein,
the second sealing piece (42) is of a sealing ring structure, a first mounting groove is provided in an outer wall of the valve seat, and the second sealing piece (42) is mounted in the first mounting groove; and/or,
the third sealing piece (43) is of a sealing ring structure, a second mounting groove is provided in an outer wall of the valve core sleeve (90), and the third sealing piece (43) is mounted in the second mounting groove.

17. The electronic expansion valve as claimed in claim 3, wherein the valve core (30) is made of a non-metal material, and an inner wall of the valve core (30) or an end surface of the valve core (30) forms a soft sealing surface (31).

18. The electronic expansion valve as claimed in claim 17, wherein the valve core (30) is made of a polytetrafluoroethylene material.
